# EUROPÄISCHE PATENTSCHRIFT

(11) **EP 4 257 936 B1**
(45) Veröffentlichungstag und Bekanntmachung des Hinweises auf die Patenterteilung: **28.05.2025**
(21) Anmeldenummer: 23165566.3
(22) Anmeldetag: 30.03.2023
(51) Int. Cl.: G01F 23/284, B65D 25/38, A47L 15/44, B67D 7/02, D06F 39/02

(54) **ANDOCKEINHEIT ZUR VERBINDUNG EINES BEHÄLTERS FÜR EIN FLÜSSIGES MEDIUM MIT EINER ABLEITUNG**
DOCKING UNIT FOR CONNECTING A CONTAINER FOR A LIQUID MEDIUM TO A DRAIN
UNITÉ D'ACCUEIL POUR RELIER UN RÉCIPIENT POUR UN MILIEU LIQUIDE À UNE DÉRIVATION

(30) Priorität: 07.04.2022 AT 502272022
(43) Veröffentlichungstag der Anmeldung: 11.10.2023
(73) Patentinhaber: Hagleitner, Hans Georg, 5700 Zell am See (AT)
(72) Erfinder: Hagleitner, Hans Georg, 5700 Zell am See (AT)
(74) Vertreter: Torggler & Hofmann Patentanwälte - Innsbruck

(56) Entgegenhaltungen:
- EP-A1- 2 868 622
- DE-A1- 102019 132 397
- US-A1- 2002 189 667
- US-A1- 2014 266 864
- US-A1- 2021 275 850
- US-B2- 11 142 449
- US-B2- 7 619 581
- US-B2- 9 151 838

## Beschreibung

Die Erfindung betrifft eine Andockeinheit zur Verbindung eines Behälters für ein flüssiges Medium mit einer Ableitung, vorzugsweise einem Schlauch, wobei die Andockeinheit an einer Öffnung des Behälters lösbar befestigbar ist, sodass ein flüssiges Medium durch die Andockeinheit fließen kann.

Die Erfindung betrifft weiterhin eine Anordnung umfassend eine Andockeinheit und einen Einsatz für einen Behälter, eine Dosiervorrichtung und ein Verfahren zum Anbringen einer Andockeinheit an einem Behälter.

Die Schrift EP 2 868 622 A1 zeigt eine Sauglanze mit einem Füllstandsensor am distalen Ende des Saugrohres. Nachteilig ist, dass der Füllstandsensor mit dem Medium in Kontakt kommt, wodurch er den gegebenenfalls ätzenden Eigenschaften des Mediums ausgesetzt ist. Zudem wird ein Füllstandsensor, welcher in direktem Kontakt mit dem Medium steht, verschmutzt und muss daher regelmäßig gereinigt werden. Dies ist ein zusätzlicher Aufwand.

Die Schrift WO 2021/239260 A1 zeigt ein Füllstandmessgerät zur Verwendung im technischen Gebiet der Prozessautomatisierung und Logistik, welches einen optischen Laufzeitsensor und einen RADAR-Laufzeitsensor aufweist. Nachteilig an diesem Füllstandmessgerät ist, dass es in einem zusätzlichen Schritt am Behälter, beispielsweise durch Kleben, angebracht werden muss. Zudem muss das Füllstandmessgerät zusätzlich verkabelt werden oder es muss eine zusätzliche Funkverbindung eingerichtet werden.

Weiterer Stand der Technik ist aus den folgenden Dokumenten bekannt, wobei US 2014/266864 A1, US 9 151 838 B2, US 7 619 581 B2 und DE 10 2019 132 397 A1 Messanordnungen zum Messen eines Füllstandes und US 11 142 449 B2 eine Andockeinheit mit einer Messanordnung zum Messen eines Füllstands offenbaren.

Eine Behälteroberwand ist oft nicht parallel zur Flüssigkeitsoberfläche ausgebildet. Insbesondere bei Kunststoffbehältern kann die Behälteroberwand beispielsweise starke Wölbungen oder Griffe aufweisen. Dadurch ist es schwierig, einen geeigneten Platz für ein Füllstandmessgerät am Behälter zu finden, da das Füllstandmessgerät im Wesentlichen horizontal ausgerichtet sein sollte.

Die obenstehenden Nachteile sollen durch die Erfindung behoben werden.

Die Erfindung hat zur Aufgabe, eine Andockeinheit mit Füllstandsmessung zu schaffen, welche wartungsarm und einfach positionierbar ist.

Die Aufgabe wird gelöst durch eine Andockeinheit aus Anspruch 1, eine Anordnung aus Anspruch 8, einen Behälter aus Anspruch 10, eine Dosiervorrichtung aus Anspruch 11 und ein Verfahren aus Anspruch 14.

Erfindungsgemäß ist daher vorgesehen, dass mindestens ein als Laufzeitsensor, insbesondere RADAR-Sensor, ausgebildeter Füllstandsensor in der Andockeinheit angeordnet ist.

Mit dem Laufzeitsensor ist der Füllstand des Behälters berührungslos messbar. Dadurch wird der Laufzeitsensor nicht durch das flüssige Medium im Behälter verschmutzt und ist daher besonders wartungsarm.

Dadurch, dass der Laufzeitsensor in der Andockeinheit angeordnet ist, wird der Laufzeitsensor mit der lösbaren Befestigung der Andockeinheit am Behälter mitangeordnet. Eine zusätzliche Verkabelung oder Bereitstellung einer Funkverbindung ist daher obsolet.

"In der Andockeinheit angeordnet" kann dabei bedeuten, dass der Laufzeitsensor eine Baueinheit mit der Andockeinheit bildet. Insbesondere kann der Laufzeitsensor in oder am Gehäuse der Andockeinheit angeordnet sein.

Zudem ist die Andockeinheit dadurch, dass sie in der Öffnung des Behälters angeordnet ist, zuverlässig gerade positionierbar. Es muss also kein geeigneter zusätzlicher Platz für den Laufzeitsensor an der Behälteroberwand gefunden werden.

Der Laufzeitsensor ist im Allgemeinen dazu ausgebildet, Signale zu senden, ein reflektiertes Signal zu empfangen und durch Bestimmung einer Zeitdifferenz zwischen Aussendezeit des Signals und Ankunftszeit des reflektierten Signals eine Distanz zu berechnen.

Der Laufzeitsensor kann dazu ausgebildet sein, die Distanz von der Flüssigkeitsoberfläche im Behälter zum Laufzeitsensor zu berechnen.

Erfindungsgemäß ist der mindestens eine Laufzeitsensor im am Behälter befestigten Zustand der Andockeinheit außerhalb des Behälters angeordnet. Vom mindestens einen Laufzeitsensor sind Signale, vorzugweise elektromagnetische Wellen, besonders bevorzugt Mikrowellen, durch eine Behälterwand in das Innere des Behälters sendbar. Ein Kontakt des Sensors mit dem Medium ist daher ausgeschlossen. Der Laufzeitsensor muss daher nicht regelmäßig gereinigt werden.

Es kann vorgesehen sein, dass die Andockeinheit mindestens eine Linse für den mindestens einen Laufzeitsensor aufweist, wobei die vom mindestens einen Laufzeitsensor ausgesendeten Signale durch die Linse gesendet werden. Die Signale sind damit von der Linse formbar, vorzugsweise fokussierbar.

Bei sehr geringem Füllstand kann die Messung des Füllstands mit dem Laufzeitsensor fehlerhaft sein, insbesondere da der Laufzeitsensor dann das von der Oberfläche des Mediums reflektierte Echo und das vom Boden reflektierte Echo nicht mehr ausreichend unterscheiden kann. Ein Leerstand des Behälters ist daher schwierig zu detektieren.

In einem bevorzugten Ausführungsbeispiel weist die Andockeinheit mindestens einen Leerstandsensor zur Detektion, ob sich Medium oder Luft im Flüssigkeitskanal der Andockeinheit befindet, auf. Dadurch ist in der Andockeinheit ein Füllstandsensor und ein Leerstandsensor kombiniert, wobei sich die Sensoren gegenseitig vorteilhaft ergänzen.

Vorzugsweise ist der Leerstandsensor als optischer Sensor ausgeformt, wobei mittels des optischen Sensors Luft auf optischem Wege detektierbar sind. Insbesondere kann durch die Luft das Licht auf unterscheidbare Art anders gebrochen werden, was detektierbar ist.

In einer alternativen Ausführung kann der Leerstandsensor einen Schwimmer umfassen. Dabei kann je nach Position des Schwimmers vom Schwimmer ein elektronischer Schalter betätigbar sein. Der elektronische Schalter, insbesondere ein Reed-Schalter, kann dabei in einem Bereich frei von flüssigem Medium angeordnet sein.

In einem Ausführungsbeispiel kann die Andockeinheit ein Lesegerät zum berührungslosen Lesen eines Datenträgers aufweisen. Es ist bevorzugt vorgesehen, dass das Lesegerät als RFID-Lesegerät ausgeformt ist. Damit können Daten über den Behälter ausgelesen werden. Zudem können Daten in den RFID-Tag im Behälter eingeschrieben werden, insbesondere auch betreffend den Füllstand im Behälter.

Es kann vorgesehen sein, dass die Andockeinheit eine Logikeinheit aufweist, wobei die Logikeinheit in Datenverbindung mit dem mindestens einen Füllstandsensor steht. Bevorzugt ist die Logikeinheit über einen Datenanschluss und/oder eine Antenne an ein Datenübertragungssystem, vorzugsweise ein BUS-System, anschließbar ist.

Die Logikeinheit fungiert als zentrale Anlaufstelle für Daten vom Füllstandsensor, dem Leerstandsensor und/oder dem Lesegerät. Daten können verarbeitet und/oder weitergeleitet werden.

Im BUS-System können andere Einheiten der Dosiervorrichtung eingebunden sein, beispielsweise eine zentrale Steuereinheit.

Die Andockeinheit kann in einem Flüssigkeitskanal zwischen einem Flüssigkeitseinlass zum Einlass von Medium aus dem Behälter und einem Flüssigkeitsauslass ein Rückschlagventil aufweisen. Vorzugsweise ist dabei eine Kugel des Rückschlagventils durch einen Unterdruck in der Andockeinheit hebbar oder das Rückschlagventil durch das Andocken mechanisch aufdrückbar. Damit kann das flüssige Medium in die Andockeinheit strömen. Durch das Rückschlagventil wird ein Nachtropfen vermieden.

Die Andockeinheit kann einen Flüssigkeitsauslass aufweisen, wobei der Flüssigkeitsauslass über einen Flüssigkeitskanal in kommunikativer Verbindung mit dem Flüssigkeitseinlass steht. Am Flüssigkeitsauslass ist vorzugsweise eine Ableitung, insbesondere ein Schlauch, befestigbar. Der Schlauch kann in weiterer Folge zu einer Pumpe führen, mittels welcher ein flüssiges Medium durch den Schlauch und durch die Andockeinheit aus dem Behälter in die Richtung mindestens eines Zielgeräts förderbar ist.

Die Andockeinheit kann einen Flüssigkeitseinlass zum Einlass von Medium in den Behälter aufweisen, wobei der Flüssigkeitseinlass im befestigten Zustand der Andockeinheit unten angeordnet ist.

Die Andockeinheit kann mindestens einen Befestigungsvorsprung und/oder ein Gegengewinde zum Eingriff in eine Ausnehmung beziehungsweise ein Behälterverschlussgewinde im oder am Behälter oder in oder an einem im Behälter befestigten Einsatz aufweisen. So kann die Andockeinheit lösbar und werkzeuglos am Behälter befestigt werden.

Die Andockeinheit kann durch Einstecken und/oder Andocken in oder an eine Dichtstelle eines Einsatzes oder des Behälters lösbar am Behälter befestigt werden.

Eine erfindungsgemäße Anordnung umfasst eine beschriebene Andockeinheit und einen Einsatz für den Behälter, wobei der Einsatz in einer Öffnung des Behälters befestigbar, insbesondere einschweißbar, oder lösbar befestigbar, insbesondere einpressbar, einschraubbar oder mittels Überwurfmutter befestigbar, ist. Ein lösbares Befestigen hat den Vorteil, dass der Behälter wiederverwendbar und recycelbar ist, nachdem der Einsatz entfernt wurde.

Es kann vorgesehen sein, dass der Einsatz mit einem Rasthaken verbindbar, insbesondere verrastbar, ist, wobei der Rasthaken an der Innenseite des Behälters anlegbar ist. Der Rasthaken kann sich gegen die Innenseite des Behälters stemmen und damit den Einsatz in der Öffnung des Behälters halten.

Der Rasthaken kann hierbei ein längliches Bauteil sein, welches längs durch die Öffnung des Behälters in den Behälter einbringbar ist und quer die Öffnung überbrücken kann, sodass der Rasthaken an der Innenseite des Behälters anlegbar ist.

Der Einsatz kann einen Befestigungsteil zur Befestigung in einer Öffnung des Behälters aufweisen. Der Befestigungsteil kann eine dazu geeignete Form oder Befestigungsmittel aufweisen. Es ist dabei bevorzugt vorgesehen, dass am oder im Befestigungsteil ein Datenträger, insbesondere ein RFID-Tag, angeordnet ist. Der Datenträger kann mit einem Lesegerät, welches in der Andockeinheit angeordnet sein kann, ausgelesen werden.

Zudem kann vorgesehen sein, dass der Einsatz ein Saugrohr aufweist, wobei das Saugrohr mit dem Befestigungsteil verbunden ist und in das Innere des Behälters ragt. Mittels des Saugrohrs kann flüssiges Medium in die Andockeinheit und weiter in Richtung eines Zielgeräts gesaugt werden.

An einem erfindungsgemäßen Behälter ist eine Andockeinheit lösbar befestigt. Es ist bevorzugt vorgesehen, dass die mindestens eine Andockeinheit an der Oberseite des Behälters angeordnet ist.

Insbesondere ist bevorzugt vorgesehen, dass ein Einsatz im Behälter, insbesondere in der Öffnung des Behälters, befestigt ist.

Eine erfindungsgemäße Dosiervorrichtung weist mindestens einen Behälter mit Andockeinheit und Einsatz auf, wobei das flüssige Medium mit mindestens einer Pumpe aus dem mindestens einen Behälter durch die Andockeinheit in die Richtung mindestens eines Zielgeräts, insbesondere mindestens eine Waschmaschine oder mindestens eines Geschirrspülers, förderbar ist. Bevorzugt ist die mindestens eine Pumpe im Förderweg nach der Andockeinheit angeordnet. Die mindestens eine Pumpe kann aber auch in der Andockeinheit angeordnet sein.

In einem Ausführungsbeispiel der Dosiervorrichtung steht die Andockeinheit, insbesondere die Logikeinheit der Andockeinheit, in Datenverbindung mit einer Zentralsteuereinheit zum Steuern der Dosiervorrichtung steht. Die Zentralsteuereinheit kann unter anderem auch mit der Pumpe und dem Zielgerät in Datenverbindung stehen.

In einem weiteren Ausführungsbeispiel sind mindestens zwei Behälter mit Andockeinheit und/oder Einsatz und mindestens zwei Pumpen vorgesehen und jeweils eine Pumpe pro Behälter vorgesehen. Bevorzugt ist das flüssige Medium mittels der Pumpen in einen Einspülverteiler förderbar, bevorzugt wobei das flüssige Medium vom Einspülverteiler über ein Spülmedium, insbesondere Wasser, weiter zum mindestens einen Zielgerät förderbar ist.

Mit der Dosiervorrichtung können mehrere verschiedene flüssige Medien miteinander gemischt werden und zusammen oder hintereinander einem Zielgerät zugeführt werden.

Ein erfindungsgemäßes Verfahren zum Anbringen einer Andockeinheit an einem Behälter mit den folgenden Verfahrensschritten:
- Einpressen eines Einsatzes und/oder Einschweißen eines Einsatzes und/oder Besfestigung eines Einsatzes mittels Überwurfmutter und/oder Befestigung eines Einsatzes (22) an einem an der Innenwand des Behälters anlegbaren Rasthaken in der Öffnung des Behälters,
- Lösbares Befestigen der Andockeinheit am Einsatz, vorzugsweise wobei die Andockeinheit mittels einer Drehung oder mittels Verhaken an einem Behälterverschlussgewinde des Behälters und/oder durch Einstecken und/oder Andocken in oder an eine Dichtstelle lösbar befestigbar ist.

Weitere Ausführungsbeispiele werden in den Figuren beschrieben. Dabei zeigen:
- Fig. 1a: Dosiervorrichtung mit einer Pumpe, einem Behälter und einer Andockeinheit
- Fig. 1b: Dosiervorrichtung mit mehreren Pumpen, Behältern und Andockeinheiten
- Fig. 2: Andockeinheit in einer schematischen Schnittdarstellung
- Fig. 3a: Einsatz für einen Behälter in einer schematischen Schnittdarstellung
- Fig. 3b: Behälter mit einem Einsatz in einer schematischen Schnittdarstellung
- Fig. 3c: Behälter mit einem alternativen Ausführungsbeispiel eines Einsatzes in einer schematischen Schnittdarstellung
- Fig. 4: Behälter mit einer Andockeinheit und einem Einsatz in einer schematischen Schnittdarstellung.

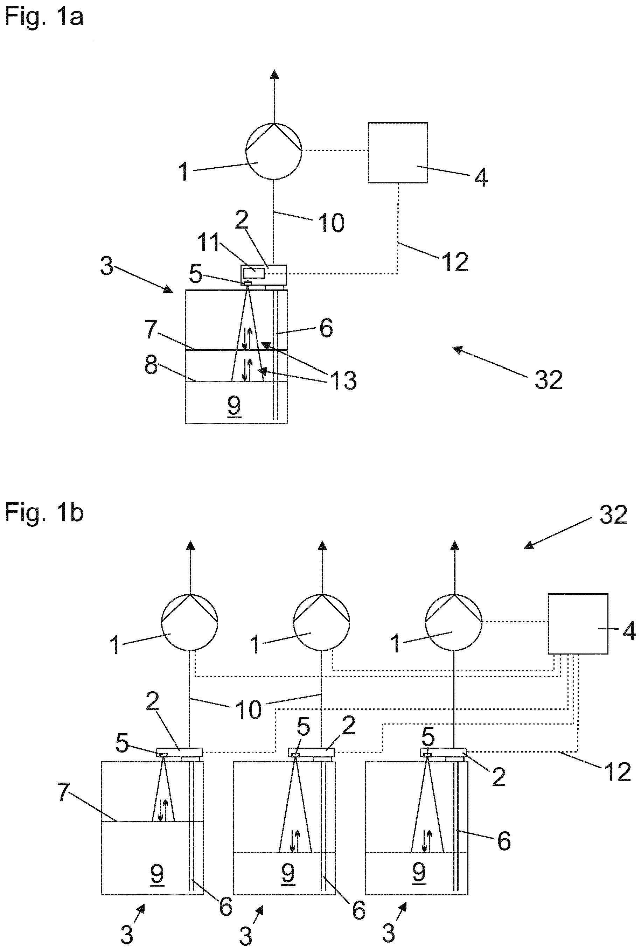

Die Fig. 1a zeigt eine Dosiervorrichtung 32 zum Dosieren eines flüssigen Mediums 9, welches sich in einem Behälter 3 befindet. Das flüssige Medium 9 kann durch eine Andockeinheit 2, welche an einer Öffnung des Behälters 3 lösbar befestigt ist, mittels einer Pumpe 1 angesaugt werden. Das flüssige Medium 9 kann von der Pumpe 1 weiter in die Richtung eines Zielgeräts, insbesondere einer Waschmaschine oder eines Geschirrspülers, gefördert werden (Pfeile in den Figuren 1a und 1b). Es kann dabei vorgesehen sein, dass das flüssige Medium 9 mittels der Pumpe nicht direkt bis zum Zielgerät gefördert wird. Dagegen kann vor dem Spülgerät ein Einspülverteiler vorgesehen sein, in welchem verschiedene Medien 9 vermischt und mittels eines Spülmediums weiter an ein Zielgerät gefördert werden.

Sowohl die Pumpe 1 als auch die Andockeinheit 2 sind über eine Datenleitung mit einer Zentralsteuereinheit 4 verbunden. Die Zentralsteuereinheit 4 kann die gesamte Dosiervorrichtung 32 steuern und dient als zentrale Recheneinheit für die Dosiervorrichtung 32. Dazu steht die Zentralsteuereinheit 4 über Datenleitungen 12 in Datenverbindung mit der Pumpe 1 und der Andockeinheit 2.

Die Andockeinheit 2 weist einen Laufzeitsensor 5, insbesondere einen RADAR-Sensor, auf. Der Laufzeitsensor 5 kann Signale 13 aussenden, wobei die Signale 13 unter anderem von der Oberfläche des sich im Behälter 3 befindlichen flüssigen Mediums 9 reflektiert werden. Das reflektierte Echo kann vom Laufzeitsensor 5 empfangen werden.

Damit kann der Abstand zwischen dem Laufzeitsensor 5 und der Oberfläche des flüssigen Mediums 9 bestimmt werden. Aus dieser Information kann der Füllstand 7 des Behälters 3 bestimmt werden. Insbesondere ist eine kontinuierliche Füllstandmessung möglich.

In der Fig. 1a sind insbesondere zwei verschiedene Füllstände 7 und 8 eingezeichnet, ein erster, oberer Füllstand 7 und ein zweiter, unterer Füllstand 8. Damit kann unter Zunahme von Informationen über den Behälter 3 eine Volumendifferenz zwischen dem ersten und dem zweiten Füllstand bestimmt werden. Diese Volumendifferenz kann als Referenzvolumen zum Kalibrieren der Pumpe 1 verwendet werden. Vorzugsweise findet die Berechnung zur Kalibrierung in der Zentralsteuereinheit 4 statt.

Da der Laufzeitsensor 5 beliebige Füllstände 7 messen kann, kann das Referenzvolumen beliebig gewählt werden. Dadurch sind eine nahezu kontinuierliche Füllstandmessung und auch eine nahezu kontinuierliche Kalibrierung möglich.

In der Andockeinheit 2 ist weiterhin eine Logikeinheit 11 angeordnet, welche unter anderem die Daten des Laufzeitsensors 5 weiterleitet.

Die Fig. 1b zeigt eine Dosiervorrichtung 32 mit mehreren Behältern 3, welche unterschiedliche flüssige Medien 9 enthalten können. Auf jedem Behälter 3 ist eine eigene Andockeinheit 2 mit Laufzeitsensor 5 angeordnet, wobei jede Andockeinheit 2 über eine Ableitung 10 in kommunikativer Verbindung mit einer Pumpe 1 steht.

Alle Andockeinheiten 2 und alle Pumpen 1 sind mit einer Zentralsteuereinheit 4 über Datenleitungen 12 verbunden.

Zu den Figuren 1a und 1b sei angemerkt, dass die Datenleitungen 12 auch kabellos über Funk ausgebildet sein können.

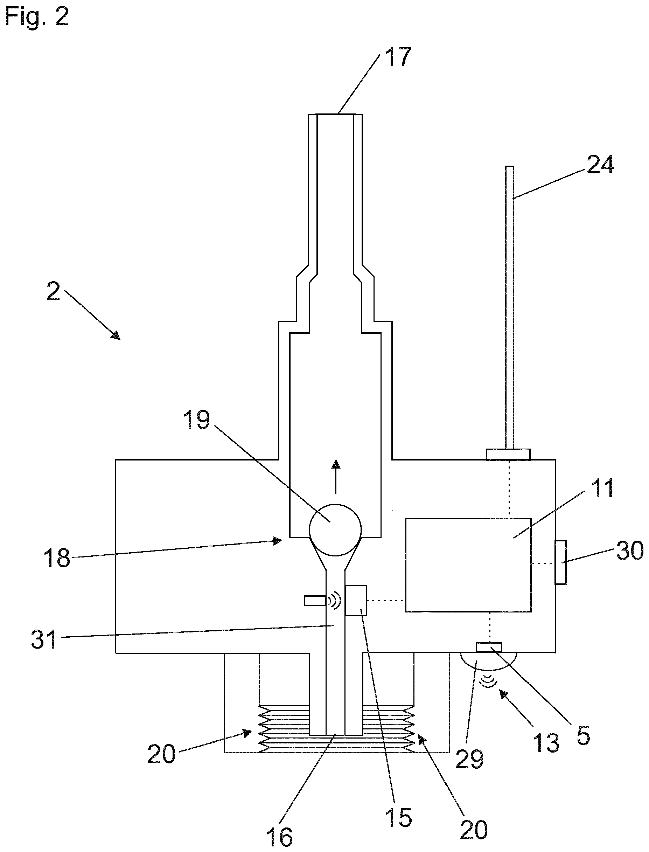

Die Fig. 2 zeigt ein Ausführungsbeispiel einer Andockeinheit 2 in einer schematischen Schnittdarstellung.

An der Oberseite der Andockeinheit 2 ist ein Flüssigkeitsauslass 17 vorgesehen, welcher zum Anschluss eines Schlauchs als Ableitung 10 geeignet ist.

Aus der Schnittdarstellung ist auch der Flüssigkeitseinlass 16 ersichtlich, über welchen ein flüssiges Medium 9 in die Andockeinheit 2 gelangen kann. Der Flüssigkeitseinlass 16 ist an einem Fortsatz an der Unterseite der Andockeinheit 2 ausgebildet, sodass der Flüssigkeitseinlass in einen Einsatz 22 und/oder einen Behälter 3 eingeführt werden kann.

An den Flüssigkeitseinlass 16 schließt ein Flüssigkeitskanal 31 an, welcher den Flüssigkeitseinlass 16 mit dem Flüssigkeitsauslass 17 verbindet. Im Flüssigkeitskanal 31 ist ein Rückschlagventil 18 angeordnet. Das Rückschlagventil 18 weist eine dichtende Kugel 19 auf. Die Kugel 19 kann mittels einer Feder (nicht dargestellt) oder durch die Schwerkraft dichtend an einen sich verjüngenden Teil des Flüssigkeitskanals 31 anliegen. Wird mittels der Pumpe 1 ein Unterdruck angelegt, hebt sich die Kugel 19 und Flüssigkeit kann durch den Flüssigkeitskanal 31 fließen. Alternativ kann das Rückschlagventil 18 mechanisch beim Andocken aufgedrückt werden.

Weiterhin ersichtlich ist der Laufzeitsensor 5, welcher an einer Unterseite der Andockeinheit 2 angeordnet ist. Im befestigten Zustand der Andockeinheit 2 kann der Laufzeitsensor 5 so Signale 13 durch die Behälterwand in das Innere des Behälters 3 senden. Im Signalweg kann eine Linse 29 angeordnet sein, wobei die Linse 29 nicht zwingend für die Funktion erforderlich ist.

Auch vorgesehen ist ein Leerstandsensor 15, welcher einen Leerstand im Behälter 3 messen kann. Insbesondere kann der Leerstandsensor 15 Luft im angesaugten flüssigen Medium 9 detektieren. Die Luft gelangt in das flüssige Medium, wenn der Behälter 3 fast leer ist.

In dieser Ausführungsform der Andockeinheit 2 ist der Leerstandsensor 15 als optischer Sensor ausgebildet. Insbesondere wird ein transluzenter Abschnitt des Flüssigkeitskanals 31 von einer Seite mittels einer Lichtquelle von Licht durchschienen. Auf der gegenüberliegenden Seite des Flüssigkeitskanals ist ein Sensor angebracht, welcher das Licht detektieren kann. Durch die Luft im flüssigen Medium ändert sich das Brechungsverhalten des Lichts, sodass das Vorhandensein von Luft detektiert werden kann.

In der Andockeinheit 2 ist zudem eine die Logikeinheit 11 schematisch eingezeichnet. Diese steht in Datenverbindung mit dem Laufzeitsensor 5 und dem Leerstandsensor 15. Die Logikeinheit 11 kann weiterhin in Datenverbindung mit einem Lesegerät zum Lesen von RFID-Daten aus einem im Behälter 3 oder im Einsatz 22 befindlichen RFID-Tag stehen, wobei das Lesegerät nicht eingezeichnet ist.

Die Daten können an eine Antenne 24 zum drahtlosen Übertragen von Daten und/oder einen Datenanschluss 30 zum Anschluss eines Kabels zum kabelgebundenen Übertragen von Daten weitergeleitet werden. Über die genannten Schnittstellen kann die Andockeinheit mit anderen Einheiten kommunizieren. Insbesondere kann die Andockeinheit 2 so mit einer Zentralsteuereinheit 4 verbunden werden.

Zum lösbaren Befestigen der Andockeinheit 2 an einem Behälter 3 und/oder einem Einsatz 22 ist ein Gegengewinde 20 an der Unterseite der Andockeinheit vorgesehen. Beispielsweise kann das Gegengewinde 20 zum Eingriff in ein Behälterverschlussgewinde 21 ausgebildet sein.

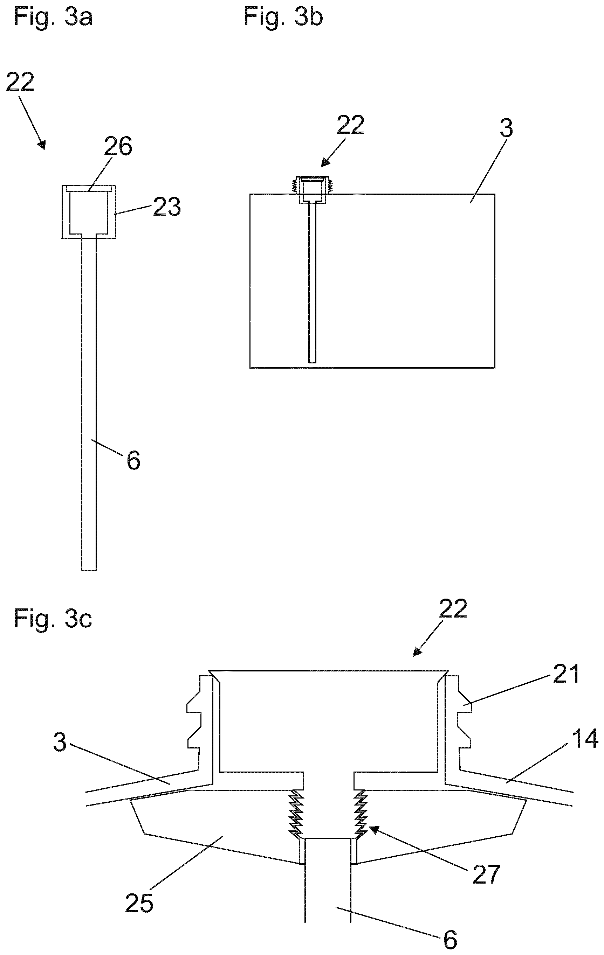

Die Fig. 3a zeigt einen Einsatz 22 in einer schematischen Schnittdarstellung. Die Fig. 3b zeigt einem in einen Behälter 3 lösbar befestigten Einsatz 22.

Der Einsatz 22 weist ein Saugrohr 6 und einen Befestigungsteil 23 auf. Mit dem Befestigungsteil 23 kann der Einsatz 22 in einer Behälteröffnung, vorzugsweise durch Einpressen, lösbar befestigt werden. Dadurch, dass der Einsatz 22 lösbar im Behälter 3 befestigt ist, kann der Behälter 3 nach der Verwendung vom Einsatz 22 getrennt recycelt oder wiederverwendet werden.

Am Befestigungsteil 23 ist zudem eine Dichtung 26 angeordnet, welche den Einsatz 22 gegenüber einer eingesetzten Andockeinheit 2 abdichten kann.

Mittels des Saugrohrs 6, welches bevorzugt aus einem weicheren Material als das Befestigungsteil 23 gefertigt ist, kann das flüssige Medium 9 aus dem Behälter 3 gesaugt werden.

In der Fig. 3b ist ersichtlich, dass der Einsatz 22 in die Behälteröffnung eingebracht wird und dort vorzugsweise eingepresst wird.

Am Einsatz 22 kann ein Datenträger, insbesondere ein RFID-Tag, angeordnet sein, welcher mittels eines an der Andockeinheit 2 angeordneten Lesegeräts ausgelesen werden kann.

Die Fig. 3c zeigt ein alternatives Ausführungsbeispiel eines Einsatzes 22. In diesem Ausführungsbeispiel ist der Einsatz 33 mit einem Rasthaken 25 verbindbar. Der Rasthaken 25 ist ein zusätzliches Bauteil, welches an der Innenseite des Behälters 3 anlegbar ist. Insbesondere kann der Rasthaken 25 so ausgebildet sein, dass er längs durch die Behälteröffnung in den Behälter 3 einbringbar ist und quer die Behälteröffnung überbrücken kann. So kann sich der Rasthaken 25 gegen die Innenseite des Behälters 3 stemmen und den Einsatz 22 in der Öffnung des Behälters 3 halten.

Die Verbindung zwischen dem Einsatz 22 und dem Rasthaken 25 erfolgt vorzugsweise mittels Verrasten mit einer Rastvorrichtung 27, es sind aber auch andere Verbindungen möglich. Eine Rastvorrichtung 27 kann mehrere Rastzähne aufweisen.

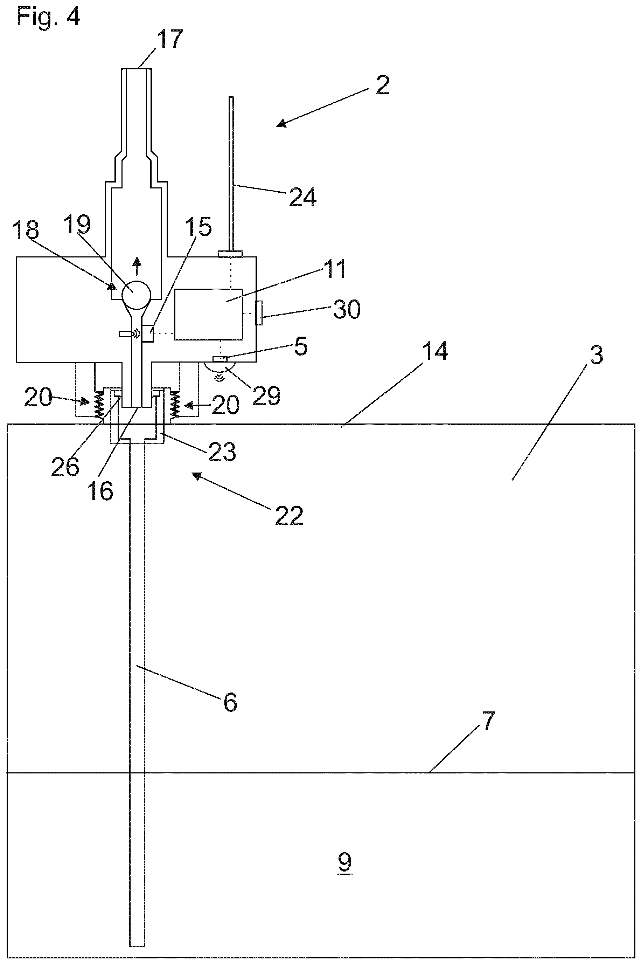

Die Fig. 4 zeigt einen Behälter 3 mit einem Einsatz 22, welcher in der Behälteröffnung befestigt ist, und einer Andockeinheit 2, welche im Einsatz 22 und am Behälter 3 lösbar befestigt ist.

Die Andockeinheit 2 kann mittels eines an der Andockeinheit 2 angeordneten Gegengewindes 20 am Behälterverschlussgewinde 21 des Behälters 3 durch Drehung oder durch Verhaken lösbar befestig werden.

Der Flüssigkeitseinlass 16 wird dadurch in kommunikative Verbindung mit dem Inneren des Einsatzes 22 und dem Saugrohr 6 gebracht, sodass flüssiges Medium 9 aus dem Behälter 3 in die Andockeinheit 2 gesaugt werden kann. Eine Dichtung 26, welche als Dichtlippe ausgeformt sein kann, dichtet die Andockeinheit gegenüber dem Einsatz 22 ab, insbesondere wird der Fortsatz der Andockeinheit, an welchem der Flüssigkeitseinlass 16 angeordnet ist, gegenüber dem Einsatz 22 abgedichtet.

Im befestigten Zustand der Andockeinheit 2 ist der Laufzeitsensor 5 zur Messung des Füllstands nach unten zum Behälter 3 hin ausgerichtet. Die Signale 13 des Laufzeitsensors 5 werden durch die obere Behälterwand 14 in das Innere des Behälters 3 gesendet. Das vom flüssigen Medium 9, insbesondere der Oberfläche des flüssigen Mediums 9 bei bestimmten Füllstand 7, reflektierte Echo geht ebenfalls durch die Behälterwand 14 und wird vom Laufzeitsensor 5 detektiert.

Durch die Messung der Laufzeit kann der Füllstand 7 im Behälter 3 bestimmt werden. Bei sehr niedrigem Füllstand 7 ist der Laufzeitsensor 5 nicht mehr zuverlässig. Daher kann mittels des zusätzlichen Leerstandsensors 15 detektiert werden, ob sich Luft durch das Saugrohr 6 angesaugt wird.

### Bezugszeichenliste:

- 1: Pumpe
- 2: Andockeinheit
- 3: Behälter
- 4: Zentralsteuereinheit
- 5: Laufzeitsensor
- 6: Saugrohr
- 7: Füllstand
- 8: Zweiter Füllstand
- 9: Flüssiges Medium
- 10: Ableitung
- 11: Logikeinheit
- 12: Datenleitung
- 13: Signal
- 14: Behälterwand
- 15: Leerstandsensor
- 16: Flüssigkeitseinlass
- 17: Flüssigkeitsauslass
- 18: Rückschlagventil
- 19: Kugel
- 20: Gegengewinde
- 21: Behälterverschlussgewinde
- 22: Einsatz
- 23: Befestigungsteil
- 24: Antenne
- 25: Rasthaken
- 26: Dichtung
- 27: Rastvorrichtung
- 29: Linse
- 30: Datenanschluss
- 31: Flüssigkeitskanal
- 32: Dosiervorrichtung

## Patentansprüche

1. Andockeinheit (2) zur Verbindung eines Behälters (3) für ein flüssiges Medium (9) mit einer Ableitung (10), vorzugsweise einem Schlauch, wobei die Andockeinheit (2) an einer Öffnung des Behälters (3) lösbar befestigbar ist, sodass das flüssige Medium (9) durch die Andockeinheit (2) fließen kann, wobei in der Andockeinheit (2) mindestens ein als Laufzeitsensor (5), insbesondere RADAR-Sensor, ausgebildeter Füllstandsensor zum Messen des Füllstands (7) im Behälter (3) angeordnet ist, **dadurch gekennzeichnet, dass** der mindestens eine Laufzeitsensor (5) im am Behälter (3) befestigten Zustand der Andockeinheit (2) außerhalb des Behälters (3) angeordnet ist und/oder vom mindestens einen Füllstandsensor Signale (13), vorzugweise elektromagnetische Wellen, besonders bevorzugt Mikrowellen, durch eine Behälterwand (14) in das Innere des Behälters (3) sendbar sind.

2. Andockeinheit (2) nach einem der vorhergehenden Ansprüche, wobei die Andockeinheit (2) mindestens eine Linse (29) für den mindestens einen Laufzeitsensor (5) aufweist, wobei die vom mindestens einen Laufzeitsensor (5) ausgesendeten Signale (13) durch die Linse (29) gesendet werden, vorzugsweise wobei die Signale (13) von der Linse (29) fokussierbar sind.

3. Andockeinheit (2) nach einem der vorhergehenden Ansprüche, wobei die Andockeinheit (2) mindestens einen Leerstandsensor (15) zur Detektion, ob sich Medium oder Luft im Flüssigkeitskanal (31) der Andockeinheit befindet, aufweist, vorzugweise wobei
- der Leerstandsensor (15) als optischer Sensor ausgeformt ist, wobei mittels des optischen Sensors Luft auf optischem Wege detektierbar ist, und/oder
- der Leerstandsensor (15) einen Schwimmer umfasst, besonders bevorzugt wobei je nach Position des Schwimmers vom Schwimmer ein elektronischer Schalter betätigbar ist.

4. Andockeinheit (2) nach einem der vorhergehenden Ansprüche, wobei die Andockeinheit (2)
- ein Lesegerät zum berührungslosen Lesen eines Datenträgers aufweist, vorzugsweise wobei das Lesegerät als RFID-Lesegerät ausgeformt ist, und/oder
- eine Logikeinheit (11) aufweist, wobei die Logikeinheit (11) in Datenverbindung mit dem mindestens einen Laufzeitsensor (5) steht, bevorzugt wobei die Logikeinheit (11) über einen Datenanschluss (30) und/oder eine Antenne (24) an ein Datenübertragungssystem, vorzugsweise ein BUS-System, anschließbar ist.

5. Andockeinheit (2) nach einem der vorhergehenden Ansprüche, wobei die Andockeinheit (2) in einem Flüssigkeitskanal (31) zwischen einem Flüssigkeitseinlass (16) zum Einlass von Medium aus dem Behälter (3) und einem Flüssigkeitsauslass (17) ein Rückschlagventil (18) aufweist, vorzugsweise wobei eine Kugel (19) des Rückschlagventils (18) durch einen Unterdruck in der Andockeinheit (2) hebbar ist oder das Rückschlagventil (18) durch das Andocken mechanisch aufdrückbar ist und somit das flüssige Medium (9) in die Andockeinheit (2) strömen kann.

6. Andockeinheit (2) nach einem der vorhergehenden Ansprüche, wobei die Andockeinheit (2) einen Flüssigkeitsauslass (17) aufweist, wobei der Flüssigkeitsauslass (17) über einen Flüssigkeitskanal (31) in kommunikativer Verbindung mit dem Flüssigkeitseinlass (16) steht, vorzugsweise wobei am Flüssigkeitsauslass (17) eine Ableitung (10), insbesondere ein Schlauch, befestigbar ist und/oder wobei die Andockeinheit einen Flüssigkeitseinlass (16) zum Einlass von Medium in den Behälter (3) aufweist, wobei der Flüssigkeitseinlass im befestigten Zustand der Andockeinheit (2) unten angeordnet ist.

7. Andockeinheit (2) nach einem der vorhergehenden Ansprüche, wobei die Andockeinheit (2) mindestens einen Befestigungsvorsprung und/oder ein Gegengewinde (20) zum Eingriff in eine Führung beziehungsweise ein Behälterverschlussgewinde (21) im Behälter (3) oder in einem im Behälter (3) befestigten Einsatz (22) aufweist.

8. Anordnung umfassend eine Andockeinheit (2) nach einem der vorhergehenden Ansprüche und einen Einsatz (22) für den Behälter (3), wobei der Einsatz (22) in einer Öffnung des Behälters (3)
- befestigbar, insbesondere einschweißbar, und/oder
- lösbar befestigbar, insbesondere einpressbar, einschraubbar oder mittels Überwurfmutter befestigbar ist, und/oder
- mit einem Rasthaken (25) verbindbar, insbesondere verrastbar, ist, wobei der Rasthaken (25) an der Innenseite des Behälters (3) anlegbar ist.

9. Anordnung nach dem vorhergehenden Anspruch, wobei der Einsatz (22) einen Befestigungsteil (23) zur Befestigung in einer Öffnung des Behälters (3) aufweist, vorzugsweise
- wobei ein Datenträger, insbesondere ein RFID-Tag, am oder im Befestigungsteil (23) angeordnet ist, und/oder
- wobei der Einsatz (22) ein Saugrohr (6) aufweist, wobei das Saugrohr (6) mit dem Befestigungsteil (23) verbunden ist und in das Innere des Behälters (3) ragt.

10. Behälter (3), an welchem eine Andockeinheit (2) nach einem der Ansprüche 1 bis 7 lösbar befestigt ist, vorzugsweise wobei
- die mindestens eine Andockeinheit (2) an der Oberseite des Behälters (3) angeordnet ist, und/oder
- mindestens ein Einsatz (22) aus Anspruch 8 oder 9 im Behälter (3) befestigt ist.

11. Dosiervorrichtung (32) mit mindestens einem Behälter (3) nach dem vorhergehenden Anspruch, wobei das flüssige Medium (9) mit mindestens einer Pumpe (1) aus dem mindestens einen Behälter (3) durch die Andockeinheit (2) in die Richtung mindestens eines Zielgeräts, insbesondere mindestens eine Waschmaschine oder mindestens eines Geschirrspülers, förderbar ist, vorzugsweise wobei die mindestens eine Pumpe (1) nach der Andockeinheit (2) angeordnet ist.

12. Dosiervorrichtung (32) nach dem vorhergehenden Anspruch, wobei die Andockeinheit (2), insbesondere die Logikeinheit (11) der Andockeinheit (2), in Datenverbindung mit einer Zentralsteuereinheit (4) zum Steuern der Dosiervorrichtung (32) steht.

13. Dosiervorrichtung (32) nach Anspruch 11 oder 12, wobei mindestens zwei Behälter (3) nach Anspruch 10 und mindestens zwei Pumpen (1) vorgesehen sind und jeweils eine Pumpe (1) pro Behälter (3) vorgesehen ist, vorzugsweise wobei das flüssige Medium (9) mittels der Pumpen (1) in einen Einspülverteiler förderbar ist, besonders bevorzugt wobei das flüssige Medium (9) vom Einspülverteiler über ein Spülmedium, insbesondere Wasser, weiter zum mindestens einen Zielgerät förderbar ist.

14. Verfahren zum Anbringen einer Andockeinheit (2) an einem Behälter (3) mit den folgenden Verfahrensschritten:
- Einpressen eines Einsatzes (22) und/oder Einschweißen eines Einsatzes (22) und/oder Befestigung eines Einsatzes (22) mittels Überwurfmutter und/oder Befestigung eines Einsatzes (22) an einem an der Innenwand des Behälters (3) anlegbaren Rasthaken (25), insbesondere eines Einsatzes (22) aus Anspruch 8 oder 9, in der Öffnung des Behälters (3),
- Lösbares Befestigen der Andockeinheit (2) aus einem der Ansprüche 1 bis 7 am Einsatz (22), vorzugsweise wobei die Andockeinheit (2) mittels einer Drehung oder mittels Verhakens an einem Behälterverschlussgewinde (21) des Behälters (3) und/oder durch Einstecken und/oder Andocken in oder an eine Dichtstelle lösbar befestigbar ist.

## Claims

1. Docking unit (2) for connecting a container (3) for a liquid medium (9) to a discharge line (10), preferably a hose, wherein the docking unit (2) can be releasably attached to an opening of the container (3) so that the liquid medium (9) can flow through the docking unit (2), wherein in the docketing unit (2) there is arranged at least one filling level sensor, which is designed as a runtime sensor (5), in particular a radar sensor, for measuring the filling level (7) in the container (3), **characterized in that** the at least one runtime sensor (5) is arranged outside the container (3) in the state of the docking unit (2) being attached to the container (3) and/or signals (13), preferably electromagnetic waves, particularly preferably microwaves, can be transmitted from the at least one filling level sensor through a container wall (14) into the interior of the container (3).

2. Docking unit (2) according to one of the preceding claims, wherein the docking unit (2) has at least one lens (29) for the at least one runtime sensor (5), wherein the signals (13) emitted by the at least one runtime sensor (5) are transmitted through the lens (29), preferably wherein the signals (13) can be focused by the lens (29).

3. Docking unit (2) according to one of the preceding claims, wherein the docking unit (2) has at least one empty-status sensor (15) for detecting whether medium or air is located in the liquid channel (31) of the docking unit, preferably wherein
- the empty-status sensor (15) is formed as an optical sensor, wherein air can be detected optically by means of the optical sensor, and/or
- the empty-status sensor (15) comprises a float, particularly preferably wherein an electronic switch can be actuated by the float depending on the position of the float.

4. Docking unit (2) according to one of the preceding claims, wherein the docking unit (2)
- has a reader for contactless reading of a data carrier, preferably wherein the reader is formed as an RFID reader, and/or
- has a logic unit (11), wherein the logic unit (11) is in data communication with the at least one runtime sensor (5), preferably wherein the logic unit (11) can be connected to a data transmission system, preferably a bus system, via a data connection (30) and/or an antenna (24).

5. Docking unit (2) according to one of the preceding claims, wherein the docking unit (2) has a non-return valve (18) in a liquid channel (31) between a liquid inlet (16) for the admission of medium from the container (3) and a liquid outlet (17), preferably wherein a ball (19) of the non-return valve (18) can be lifted by a negative pressure in the docking unit (2) or the non-return valve (18) can be mechanically pushed open by the docking and thus the liquid medium (9) can flow into the docking unit (2).

6. Docking unit (2) according to one of the preceding claims, wherein the docking unit (2) has a liquid outlet (17), wherein the liquid outlet (17) is in communicative connection with the liquid inlet (16) via a liquid channel (31), preferably wherein a discharge line (10), in particular a hose, can be attached to the liquid outlet (17), and/or wherein the docking unit has a liquid inlet (16) for the admission of medium into the container (3), wherein in the attached state of the docking unit (2), the liquid inlet is arranged at the bottom.

7. Docking unit (2) according to one of the preceding claims, wherein the docking unit (2) has at least one fastening projection and/or a mating thread (20) for engaging in a guide or a container closure thread (21) in the container (3) or in an insert (22) fastened in the container (3).

8. Arrangement comprising a docking unit (2) according to one of the preceding claims and an insert (22) for the container (3), wherein in an opening of the container (3) the insert (22)
- can be fastened, in particular welded in, and/or
- can be releasably attached, in particular press-fitted, screw-fitted or attached by means of a cap nut, and/or
- can be connected, in particular latched, to a latching hook (25), wherein the latching hook(25) can be placed against the inside of the container (3).

9. Arrangement according to the preceding claim, wherein the insert (22) has a fastening part (23) for fastening in an opening of the container (3), preferably
- wherein a data carrier, in particular a RFID tag, is arranged on or in the fastening part (23), and/or
- wherein the insert (22) has a suction tube (6),
wherein the suction tube (6) is connected to the fastening part (23) and projects into the interior of the container (3).

10. Container (3), to which a docking unit (2) according to one of claims 1 to 7 is releasably attached, preferably wherein
- the at least one docking unit (2) is arranged on the upper side of the container (3), and/or
- at least one insert (22) from claim 8 or 9 is fastened in the container.

11. Dosing device (32) with at least one container (3) according to the preceding claim, wherein the liquid medium (9) can be conveyed by at least one pump (1) from the at least one container (3) through the docking unit (2) in the direction of at least one target device, in particular at least one washing machine or at least one dishwasher, preferably wherein the at least one pump (1) is arranged after the docking unit (2).

12. Dosing device (32) according to the preceding claim, wherein the docking unit (2), in particular the logic unit (11) of the docking unit (2), is in data communication with a central control unit (4) for open-loop controlling the dosing device (32).

13. Dosing device (32) according to claim 11 or 12, wherein at least two containers (3) according to claim 10 and at least two pumps (1) are provided and one pump (1) per container (3) is provided, preferably wherein the liquid medium (9) can be conveyed by means of the pumps (1) into a flushing distributor, particularly preferably wherein the liquid medium (9) can be conveyed from the flushing distributor via a flushing medium, in particular water, to the at least one target device.

14. Method for attaching a docking unit (2) to a container (3) comprising the following method steps:
- press-fitting an insert (22) and/or welding in an insert (22) and/or fastening an insert (22) by means of a cap nut and/or fastening an insert (22) to a latching hook (25) that can be placed against the inner wall of the container (3), in particular of an insert (22) according to claim 8 or 9, into the opening of the container (3),
- releasably fastening the docking unit (2) according to one of claims 1 to 7 to the insert (22), preferably wherein the docking unit (2) is releasably fastened by means of a rotation or by hooking onto a container closure thread (21) of the container (3) and/or by inserting and/or docking into or onto a sealing point.

## Revendications

1. Unité de couplage (2) pour raccorder un récipient (3) pour un milieu liquide (9) à une conduite d'évacuation (10), de préférence un tuyau flexible, dans laquelle l'unité de couplage (2) peut être fixée de manière amovible à une ouverture du récipient (3) si bien que le milieu liquide (9) peut s'écouler à travers l'unité de couplage (2), dans laquelle au moins un capteur de niveau de remplissage réalisé comme capteur de temps de propagation (5), en particulier capteur RADAR, destiné à mesurer le niveau de remplissage (7) dans le récipient (3) est disposé dans l'unité de couplage (2), **caractérisée en ce que** l'au moins un capteur de temps de propagation (5) est disposé dans l'état fixé sur le récipient (3) de l'unité de couplage (2) à l'extérieur du récipient (3) et/ou que des signaux (13), de préférence des ondes électromagnétiques, de manière particulièrement préférée des micro-ondes, peuvent être envoyés par l'au moins un capteur de niveau de remplissage à travers une paroi de récipient (14) à l'intérieur du récipient (3).

2. Unité de couplage (2) selon l'une quelconque des revendications précédentes, dans laquelle l'unité de couplage (2) présente au moins une lentille (29) pour l'au moins un capteur de temps de propagation (5), dans laquelle les signaux (13) émis par l'au moins un capteur de temps de propagation (5) sont envoyés à travers la lentille (29), de préférence dans laquelle les signaux (13) peuvent être focalisés par la lentille (29).

3. Unité de couplage (2) selon l'une quelconque des revendications précédentes, dans laquelle l'unité de couplage (2) présente au moins un capteur de niveau vide (15) pour détecter si du milieu ou de l'air se trouve dans le canal de liquide (31) de l'unité de couplage, de préférence dans laquelle
- le capteur de niveau vide (15) est formé en tant que capteur optique, dans laquelle l'air peut être détecté par voie optique au moyen du capteur optique, et/ou
- le capteur de niveau vide (15) comprend un flotteur, de manière particulièrement préférée, dans laquelle un commutateur électronique peut être actionné par le flotteur en fonction de la position du flotteur.

4. Unité de couplage (2) selon l'une quelconque des revendications précédentes, dans laquelle l'unité de couplage (2)
- présente un lecteur pour la lecture sans contact d'un support de données, de préférence dans laquelle le lecteur est formé comme un lecteur RFID, et/ou
- présente une unité logique (11), dans laquelle l'unité logique (11) est en liaison de données avec l'au moins un capteur de temps de propagation (5), de manière préférée dans laquelle l'unité logique (11) peut être raccordée à un système de transmission de données, de préférence un système BUS, par l'intermédiaire d'un port de données (30) et/ou d'une antenne (24).

5. Unité de couplage (2) selon l'une quelconque des revendications précédentes, dans laquelle l'unité de couplage (2) présente un clapet antiretour (18) dans un canal de liquide (31) entre une entrée de liquide (16) pour l'admission de milieu provenant du récipient (3) et une sortie de liquide (17), de préférence dans laquelle une bille (19) du clapet antiretour (18) peut être soulevée par une dépression dans l'unité de couplage (2) ou le clapet antiretour (18) peut être poussé mécaniquement par le couplage et donc le milieu liquide (9) peut s'écouler dans l'unité de couplage (2).

6. Unité de couplage (2) selon l'une quelconque des revendications précédentes, dans laquelle l'unité de couplage (2) présente une sortie de liquide (17), dans laquelle la sortie de liquide (17) est en communication avec l'entrée de liquide (16) par l'intermédiaire d'un canal de liquide (31), de préférence dans laquelle une conduite d'évacuation (10), en particulier un tuyau flexible, peut être fixée sur la sortie de liquide (17) et/ou dans laquelle l'unité de couplage présente une entrée de liquide (16) pour l'entrée de milieu dans le récipient (3), dans laquelle l'entrée de liquide est disposée en bas dans l'état fixé de l'unité de couplage (2).

7. Unité de couplage (2) selon l'une quelconque des revendications précédentes, dans laquelle l'unité de couplage (2) présente au moins une saillie de fixation et/ou un contre-filetage (20) pour venir en prise avec un guide ou un filetage de fermeture de récipient (21) dans le récipient (3) ou dans un insert (22) fixé dans le récipient (3).

8. Ensemble comprenant une unité de couplage (2) selon l'une quelconque des revendications précédentes et un insert (22) pour le récipient (3), dans lequel, dans une ouverture du récipient (3), l'insert (22)
- peut être fixé, en particulier soudé, et/ou
- peut être fixé de manière amovible, en particulier peut être compressé, vissé ou peut être fixé au moyen d'un écrou-raccord, et/ou
- peut être relié, en particulier par enclenchement, à un crochet d'enclenchement (25), dans lequel le crochet d'enclenchement (25) peut être posé sur la face intérieure du récipient (3).

9. Ensemble selon la revendication précédente, dans lequel l'insert (22) présente une pièce de fixation (23) pour la fixation dans une ouverture du récipient (3), de préférence
- dans lequel un support de données, en particulier une étiquette RFID, est disposé sur ou dans la pièce de fixation (23), et/ou
- dans lequel l'insert (22) présente un tube d'aspiration (6), dans lequel le tube d'aspiration (6) est relié à la pièce de fixation (23) et dépasse à l'intérieur du récipient (3).

10. Récipient (3), sur lequel une unité de couplage (2) est fixée de manière amovible selon l'une quelconque des revendications 1 à 7, de préférence dans lequel
- l'au moins une unité de couplage (2) est disposée sur la face supérieure du récipient (3), et/ou
- au moins un insert (22) selon la revendication 8 ou 9 est fixé dans le récipient (3).

11. Dispositif de dosage (32) avec au moins un récipient (3) selon la revendication précédente, dans lequel le milieu liquide (9) peut être refoulé avec au moins une pompe (1) à partir de l'au moins un récipient (3) à travers l'unité de couplage (2) en direction d'au moins un appareil cible, en particulier au moins un lave-linge ou au moins un lave-vaisselle, de préférence dans lequel l'au moins une pompe (1) est disposée après l'unité de couplage (2).

12. Dispositif de dosage (32) selon la revendication précédente, dans lequel l'unité de couplage (2), en particulier l'unité logique (11) de l'unité de couplage (2), est en liaison de données avec une unité de commande centrale (4) pour commander le dispositif de dosage (32).

13. Dispositif de dosage (32) selon la revendication 11 ou 12, dans lequel au moins deux récipients (3) selon la revendication 10 et au moins deux pompes (1) sont prévus et une pompe (1) est prévue respectivement par récipient (3), de préférence dans lequel le milieu liquide (9) peut être refoulé au moyen des pompes (1) dans un distributeur d'injection, de manière particulièrement préférée dans lequel le milieu liquide (9) peut être refoulé du distributeur d'injection par l'intermédiaire un milieu de rinçage, en particulier de l'eau, jusqu'à au moins un appareil cible.

14. Procédé d'installation d'une unité de couplage (2) sur un récipient (3) avec les étapes de procédé suivantes :
- de compression d'un insert (22) et/ou de soudage d'un insert (22) et/ou de fixation d'un insert (22) au moyen d'un écrou-raccord et/ou de fixation d'un insert (22) sur un crochet d'enclenchement (25) pouvant être placé sur la paroi intérieure du récipient (3), en particulier d'un insert (22) selon la revendication 8 ou 9, dans l'ouverture du récipient (3),
- de fixation amovible de l'unité de couplage (2) selon l'une quelconque des revendications 1 à 7 sur l'insert (22), de préférence dans lequel l'unité de couplage (2) peut être fixée de manière amovible par rotation ou par accrochage sur un filetage de fermeture de récipient (21) du récipient (3) et/ou par enfichage et/ou couplage dans ou sur un point d'étanchéité.
